# EUROPÄISCHE PATENTSCHRIFT

(11) **EP 2 734 902 B1**
(45) Veröffentlichungstag und Bekanntmachung des Hinweises auf die Patenterteilung: **22.07.2015**
(21) Anmeldenummer: 12728239.0
(22) Anmeldetag: 14.06.2012
(51) Int. Cl.: G05D 16/20, F16K 27/02, F16K 31/06

(54) **DRUCKREGELVENTILVORRICHTUNG MIT EINER STRÖMUNGSFÜHRUNGSEINRICHTUNG**
PRESSURE CONTROL VALVE APPARATUS HAVING A FLOW-GUIDING DEVICE
RÉGULATEUR DE PRESSION AVEC DISPOSITIF DE GUIDAGE D'ÉCOULEMENT

(30) Priorität: 19.07.2011 DE 102011079366
(43) Veröffentlichungstag der Anmeldung: 28.05.2014
(73) Patentinhaber: ZF Friedrichshafen AG, 88038 Friedrichshafen (DE)
(72) Erfinder: MAYR, Karlheinz, A-6900 Bregenz (AT); MOOSMANN, Markus, 88287 Grünkraut (DE); HAMMA, Frank, 88094 Oberteuringen (DE); REMMLINGER, Hubert, 88046 Friedrichshafen (DE)
(86) Internationale Anmeldenummer: PCT/EP2012/061322
(87) Internationale Veröffentlichungsnummer: WO 2013/010731

(56) Entgegenhaltungen:
- WO-A1-92/01163
- WO-A1-2005/026858
- DE-A1- 3 902 466
- DE-A1-102005 021 902
- DE-A1-102008 000 106

## Beschreibung

Die Erfindung bezieht sich auf eine Druckregelvorrichtung für ein Fluid gemäß dem Oberbegriff des Anspruchs 1.

Bei aus der Praxis bekannten mehrstufigen Kraftfahrzeug-Automatgetrieben werden als nasslaufende Kupplungen oder Bremsen ausgeführte Schaltelemente zum Einlegen unterschiedlicher Übersetzungssufen zwischen einer Getriebeeingangswelle und einer Getriebeausgangswelle des Automatgetriebes eingesetzt. Hierzu erfolgt, je nach gewünschter Übersetzungsstufe, ein Öffnen oder Schließen der Schaltelemente. Die hierzu benötigte Druckkraft wird meist für jedes Schaltelement durch einen hydraulisch betätigten Kupplungskolben aufgebracht, welcher über Schaltelementventile, auch Druckminderventile genannt, mit Hydraulikfluid versorgt wird. Diese Druckminderventile sind entweder selbst als Proportional-Druckregelventile ausgeführt oder werden durch eine hydraulische Vorsteuerung betätigt, wobei der zur Vorsteuerung benötigte hydraulische Druck wiederum durch ein Proportional-Druckregelventil eingestellt wird. In einem solchen Proportional-Druckregelventil wird stromabhängig eine Magnetkraft erzeugt, in deren Abhängigkeit sich an dem Ventil ein bestimmter, vorhersehbarer Arbeitsdruck einstellt. Dieser Druck ist an einem Ablaufbereich des Ventils abgreifbar und ergibt sich aus dem Verhältnis zwischen der Magnetkraft (Aktionskraft) und einer gegen die Magnetkraft gerichteten Rückführkraft des Ventils (Reaktionskraft).

Heute übliche Proportional-Druckregelventile, beispielsweise das in der WO 2005/026858 A1 offenbarte, weisen zwei in einer hydraulischen Halbbrückenschaltung gekoppelte Sitzventile auf, d.h. sie verfügen über einen Zulaufbereich und zwei Ablaufbereiche, wobei strömungstechnisch zwischen dem Zulaufbereich und dem ersten Ablaufbereich ein erstes Sitzventil angeordnet ist und zwischen dem ersten Ablaufbereich und dem zweiten Ablaufbereich ein zweites Sitzventil angeordnet ist. Hierbei sind die Sitzventile so ausgeführt und deren Schließkörper miteinander gekoppelt, dass die Schließkörper in den Endstellungen die Sitzventile wechselseitig schließen bzw. öffnen.

Zur Verringerung des Strömungswiderstandes und Steigerung einer dynamischen Regelfähigkeit eines von dem Druckregelventil angesteuerten Getriebeschaltelements wird in der WO 2005/026858 A1 eine Stromführungseinrichtung, im Detail ein Strahlumlenker, zwischen dem ersten und zweiten Ablaufbereich vorgeschlagen, welcher eine von dem ersten Sitzventil zu dem zweiten Sitzventil führende Fluidströmung weniger als 30° ablenkt.

Aus der WO 2009/092488 A1 ist zudem bekannt, eine solche Strömungsführungseinrichtung derart mit mehreren Kanalbereichen zu versehen, dass das in Richtung des zweiten Sitzventils strömende Fluid in einen Drall versetzt wird, wodurch eine Ventildynamik erhöht und eine Ventilleckage verringert wird.

Bei diesen aus dem Stand der Technik bekannten Druckregelventilen können sich ein- oder auslassseitige Druckschwankungen, die beispielsweise durch Pumpendruckschwankungen oder Slip-Stick-Effekte in den Schaltelementen eines Fahrzeuggetriebes erzeugt werden, nahezu ungehindert auf die Schließkörper der Sitzventile auswirken, wodurch eine Einstellung eines an dem Ventil abgreifbaren Arbeitsdrucks erschwert ist.

Aufgabe der Erfindung ist es daher eine gegen Druckschwankungen unempfindliche Druckregelventilvorrichtung bereitzustellen.

Diese Aufgabe wird durch eine Druckregelventilvorrichtung mit den Merkmalen von Anspruch 1 gelöst. Bevorzugte Ausgestaltungen hiervon sind den Unteransprüchen entnehmbar.

Demgemäß wird eine Druckregelventilvorrichtung für ein Fluid vorgeschlagen, mit wenigstens einem Zulaufbereich und einem ersten und zweiten Ablaufbereich, welche über zwei miteinander gekoppelte Sitzventile strömungstechnisch miteinander verbindbar sind, insbesondere um ein Fluiddruckniveau in dem ersten Ablaufbereich einzustellen, wobei durch das erste Sitzventil ein Fluidzulauf von dem Zulaufbereich zu dem ersten und zweiten Ablaufbereich einstellbar ist und durch das zweite Sitzventil ein Fluidablauf zwischen dem ersten und zweiten Ablaufbereich einstellbar ist. Hierbei ist stromauf des ersten Sitzventils in dem Zulaufbereich eine Strömungsführungseinrichtung angeordnet, welche dem zufließenden Fluid im Bereich des ersten Sitzventils eine vorgegebene Strömungscharakteristik aufprägt.

Es hat sich herausgestellt, dass eine derartige, mit einer stromauf des ersten Sitzventils im Zulaufbereich angeordneten Strömungsführungseinrichtung ausgeführte Druckregelventilvorrichtung unempfindlicher als die aus dem genannten Stand der Technik bekannten Druckregelventilvorrichtung gegenüber Druckschwankungen von dem Zulaufbereich, d.h. einer Einlassseite und von dem ersten Ablaufbereich, d.h. einem Arbeitsdruckanschluss, ist.

Außerdem ist bei den aus dem Stand der Technik bekannten Ventilen die Strömungscharakteristik des in das erste Sitzventil einströmenden Fluids unvorhersehbar von einer Vielzahl von Parametern abhängig, insbesondere von dem Fluiddruck, der Fluidfließgeschwindigkeit und der Ausgestaltung des der Druckregelventilvorrichtung stromauf gelegenen Fluidsystems (Leitungsdurchmesser, Leitungsverlauf, etc.), wodurch die Strömungscharakteristik des in das Ventil einströmenden Fluids starken Schwankungen ausgesetzt ist. Hierdurch kann es vorkommen, dass baugleiche Druckregelventilvorrichtungen bei gleichen Betriebsbedingungen (Druckniveau, Fluidtemperatur etc.) in unterschiedlichen Fluidsystemen verbaut, unterschiedliche Regelcharakteristika aufweisen. Beispielsweise kann eine Druckregelventilvorrichtung in einer Schaltvorrichtung eines Automatgetriebes eine andere Regelcharakteristik aufweisen, als eine baugleiche Druckregelventilvorrichtung in einer Schaltvorrichtung eines automatisierten Schaltgetriebes, was den unterschiedlichen Ausführungen der stromauf der Druckregelventilvorrichtung gelegenen Fluidsysteme geschuldet ist.

Durch die vorgeschlagenen Maßnahmen wird der Fluidströmung nun eine vorgegebene Fluidcharakteristik aufgeprägt, insbesondere eine Strömungsrichtung und/oder Strömungsgeschwindigkeit (Strömungsfeld). Das bedeutet, die vormals nicht vorhersehbare Charakteristik des in die Druckregelventilvorrichtung einströmenden Fluids wird durch die vorgeschlagene Strömungsführungseinrichtung in bekannte, stabilisierte Bahnen gelenkt. Insbesondere werden Druckschwankungen hierbei geglättet oder so geleitet, dass sie sich nicht oder lediglich marginal auf die Druckregelventilvorrichtung auswirken.

Durch die Fortpflanzung der durch die Strömungsführungseinrichtung stabilisierten Strömung auch stromab des ersten Sitzventils werden Anregungen oder Störungen, insbesondere Druckschwankungen, die von dem ersten Ablaufbereich der Druckregelventilvorrichtung, d.h. dem Arbeitsdruckanschluss, in die Druckregelventilvorrichtung gelangen, geglättet, wodurch sich diese in vorteilhafter Weise nicht oder nur eingeschränkt stromauf der Druckregelventilvorrichtung fortpflanzen.

Die Strömungsführungseinrichtung besteht bevorzugt als ein oder mehreren Leitschaufeln, Strömungsführungskanälen oder sonstigen Strömungsführungskörpern in dem Zulaufbereich. Die Strömungsführungseinrichtung ist hierbei insbesondere derart ausgeformt, dass das vom Zulaufbereich einströmende Fluid im Wesentlichen um den Schließkörper des ersten Sitzventils herumgeleitet wird. Druckschwankungen in der Fluidströmung treffen hierbei nicht mehr direkt senkrecht auf den Schließkörper auf, wodurch dieser weniger stark angeregt wird und eine Regelungsgüte der Ventilvorrichtung verbessert wird.

Sofern ein Anströmen des Schließkörpers unumgänglich ist, wird vorgeschlagen, die Strömungsführungseinrichtung so auszuführen, dass das von dem Zulaufbereich einströmende Fluid im Wesentlichen in Form einer dünnwandigen Strömung entlang des Schließkörpers geleitet wird. Dies kann dadurch erreicht werden, dass die Strömungsführungseinrichtung das Fluid im Wesentlichen tangential bezüglich des Schließkörpers zu diesem hin leitet. Hierbei trifft die Fluidströmung nicht mehr senkrecht auf den Schließkörper auf, sondern wird von der Strömungsführungseinrichtung strömungsgünstig in Form eines dünnen Films entlang des Schließkörpers geleitet. Dadurch, dass die Fluidströmung im Wesentlichen tangential auf den Schließkörper auftrifft, bzw. entlang diesem abgleitet, werden deutlich geringere Druckschwankungsanteile auf diesen übertragen, was die Regelungsgüte der Druckregelventilvorrichtung verbessert.

In einer besonders bevorzugten Weiterbildung der Druckregelventilvorrichtung ist vorgesehen, die Strömungsführungseinrichtung so auszuführen, dass dem zufließenden Fluid im Bereich des ersten Sitzventils ein Drall aufgeprägt wird, insbesondere eine Drallströmung um eine Längs- oder Bewegungsachse des Schließkörpers des ersten Sitzventils. Das bedeutet, die von der Strömungsführungseinrichtung vorgegebene Strömungscharakteristik entspricht der Drallströmung. Hierdurch werden Anregungen/Störungen, welche von dem Zulaufbereich oder dem ersten Ablaufbereich in die Druckregelventilvorrichtung gelangen, besonders gut gedämpft. Eine derartige Drallströmung ist besonders stabil und nimmt Anregungen/Störungen dämpfend auf. Unter einer Längs- oder Bewegungsachse des Schließkörpers wird hierbei insbesondere eine Achse verstanden, entlang welcher der Schließkörper des jeweiligen Sitzventils zum Öffnen und Schließen des Sitzventils beweglich ist.

Durch die gezielte Führung der Strömung in Richtung des ersten Sitzventils mittels der Strömungsführungseinrichtung, insbesondere in Form einer Drallströmung, wird zudem ein Strömungswiderstand des ersten Sitzventils reduziert, was im Wesentlichen auf eine Verringerung der turbulenten Strömungsanteile in dem zuströmenden Fluid zurückzuführen ist, wodurch sich eine geringere Schwingungsanregung ergibt.

In einer weiteren bevorzugten Ausführung der Druckregelventilvorrichtung ist eine zweite Strömungsführungseinrichtung vorgesehen, welche stromauf des zweiten Sitzventils strömungstechnisch zwischen dem ersten und zweiten Ablaufbereich angeordnet ist. Diese ist so ausgeführt, dass das zu dem zweiten Auslaufbereich strömende Fluid im Bereich des zweiten Sitzventils in einen Drall versetzt wird. Insbesondere wird vorgeschlagen, dem durch das zweite Sitzventil strömenden Fluid mittels der zweiten Strömungsführungseinrichtung eine Drallströmung um eine Längs- oder Bewegungsachse des Schließkörpers des zweiten Sitzventils aufzuprägen, wodurch die Ventildynamik gesteigert und ein Leckvolumenstrom der Druckregelventilvorrichtung reduziert werden kann. Wie sich gezeigt hat werden diese Effekte verstärkt, wenn beide Strömungsführungseinrichtungen so ausgeführt sind, dass der Drehsinn der Fluidströmung durch das erste Sitzventil dem Drehsinn der Fluidströmung durch das zweite Sitzventil entspricht. Sofern die erste Strömungsführungseinrichtung zur Erzeugung einer Drallströmung ausgeführt ist, kann die zweite Strömungsführungseinrichtung auch analog zu dieser ausgeführt sein.

In einer Weiterführung der Druckregelventilvorrichtung weist die erste Strömungsführungseinrichtung zumindest einen, bevorzugt mehrere Strömungsführungskanäle auf, welche zumindest annähernd tangential zu einer Sitzventilöffnung des ersten Sitzventils in den Zulaufbereich münden. Mit anderen Worten münden der bzw. die Strömungsführungskanäle zur Aufprägung der Strömungscharakteristik seitlich versetzt zu der Sitzventilöffnung in den Zulaufbereich. Die Fluidströmung wird hierdurch reibungsarm im Wesentlichen tangential zu dem Schließkörper des ersten Sitzventils geführt. Die Ausprägung einer in Form eines dünnen Films entlang des Schließkörpers durch das erste Sitzventil fließenden Fluidströmung wird hierbei unterstützt. Bevorzugt verlaufen hierbei die Strömungsführungskanäle stromabwärts in Richtung der Sitzventilöffnung gemeinsam trichterförmig zu, insbesondere derart, dass das Fluid mit zunehmender Nähe zu der Sitzventilöffnung beschleunigt wird (Drehimpulserhaltung). Falls lediglich ein Strömungsführungskanal vorgesehen ist, läuft dieser stromabwärts in Richtung der Sitzventilöffnung trichterförmig zu. Bevorzugt weist die Trichterform bezüglich einer Längs- oder Bewegungsachse des Schließkörpers des ersten Sitzventils einen Öffnungswinkel von 40° bis 80°, besonders bevorzugt 60° ±10° auf. Die Trichterform kann dabei auch abgerundet sein, insbesondere konvex oder konkav. Dann entspricht der Öffnungswinkel einem mittleren Steigungswinkel der Trichterform bezüglich der Längs- oder Bewegungsachse des Schließkörpers. Der beziehungsweise die Strömungsführungskanäle können auch jeweils in Form einer Helix ausgeführt sein. Bevorzugt verläuft die Helix dann konzentrisch oder exzentrisch um die Längs- oder Bewegungsachse des Schließkörpers. Statt oder zusätzlich zu der Helixform können der beziehungsweise die Strömungsführungskanäle spiralförmig auf die Sitzventilöffnung zulaufen, d.h. sie führen stromabwärts in einem abnehmenden Radius auf die Sitzventilöffnung zu.

In einer Weiterbildung der Druckregelventilvorrichtung nimmt eine Breite oder ein Durchmesser des bzw. der Strömungsführungskanäle, d.h. dessen Strömungsquerschnitt, mit zunehmender Nähe zu einer Längs- oder Bewegungsachse des Schließkörpers des ersten Sitzventils ab. Insbesondere weist eine Fluideintrittsöffnung bzw. ein Fluideintrittsquerschnitt, durch welche(n) Fluid in den jeweiligen Strömungsführungskanal hineinfließt, eine größere Durchtrittsfläche auf als eine Fluidaustrittsöffnung bzw. eine Fluidaustrittsfläche, durch welche Fluid aus dem jeweiligen Strömungsführungskanal hinausfließt und welche gegenüber der Eintrittsöffnung bzw. Eintrittsquerschnitt näher an der Längs- oder Bewegungsachse liegt. Hierdurch wird die Geschwindigkeit des Fluids in den Strömungsführungskanälen mit zunehmender Nähe zu der Längs- bzw. Bewegungsachse und damit in Richtung der Ventilöffnung des ersten Sitzventils erhöht, womit eine schnellere und stabilere Fluidströmung stromab der Strömungsführungskanäle im Bereich und stromab des ersten Sitzventils erzielt wird.

In einer Ausgestaltung der Druckregelventilvorrichtung ist ein Querschnitt der Strömungsführungskanäle auf einer Ebene senkrecht zu einer Längs- oder Bewegungsachse des ersten Sitzventils propellerförmig oder zumindest im Wesentlichen propellerförmig. Mit anderen Worten bilden die Strömungsführungskanäle jeweils propellerblattförmige Vertiefungen oder Kanäle, wobei sich an der Basis jedes Propellerblattes zumindest eine Öffnung für den Fluidaustritt in Richtung des ersten Ventilsitzes befindet. Diese Öffnung kann sich über die komplette Länge jedes Strömungsführungskanals erstrecken, oder lediglich im Bereich der Ventilöffnung des ersten Sitzventils befinden. Zur Erzeugung einer Drallströmung ist die Austrittsöffnung jedes Strömungsführungskanals bevorzugt gegenüber der Längs- oder Bewegungsachse seitlich versetzt, d.h. sie weist tangential an der Längs- oder Bewegungsachse vorbei. Insbesondere ist die Austrittsöffnung daher so ausgeführt, dass das Fluid die Strömungsführungskanäle tangential oder zumindest annähernd tangential bezüglich der Ventilöffnung des ersten Sitzventils verlässt. Die Propellerform der Strömungsführungskanäle entspricht oder ähnelt bevorzugt der Propellerform eines See- oder Luftfahrzeugpropellers, beispielsweise einer Boots-, Schiffs- oder Luftschraube, ohne allerdings hierauf beschränkt zu sein.

Die Strömungsführungseinrichtung kann sowohl integrierter Teil eines Gehäuses der Druckregelventilvorrichtung sein, beispielsweise indem die Strömungsführungseinrichtung in das Gehäuse produktionstechnisch eingespritzt, eingefräst oder eingebohrt ist, oder die Strömungsführungseinrichtung kann ein eigenständiges Bauteil bilden, welches fest in die Druckregelventilvorrichtung eingefügt ist, d.h. beim Herstellungsprozess beispielsweise darin eingepresst, geklebt, gespritzt oder geschraubt ist. Hierzu ist die Strömungsführungseinrichtung beispielsweise als Hülse ausgeführt, welche beim Zusammenbau der Druckregelventilvorrichtung in einem Gehäuse der Druckregelventilvorrichtung fixiert wird. Hierbei kann das erste Sitzventil auch eine gemeinsame Baueinheit mit der Strömungsführungseinrichtung bilden.

In einer weiteren Ausgestaltung ist eine Steuerkante des ersten Sitzventils der Druckregelventilvorrichtung im Wesentlichen spitzwinklig oder rechtwinklig ausgeführt. Insbesondere wenn die Strömungsführungseinrichtung so ausgeführt ist, dass diese eine Drallströmung erzeugt, wird so ein verlustarmer Durchtritt durch die Ventilöffnung des ersten Sitzventils erzielt. Die Steuerkante weist hierzu strömungsgünstig keine oder lediglich eine sehr kleine Fase auf (Fasenradius kleiner 0,1 mm), d.h. die Steuerkante ist möglichst "scharf" ausgeführt. Bevorzugt weitet sich die Ventilöffnung stromab der Ventilsteuerkante oder einer Steuerfläche des ersten Sitzventils kontinuierlich auf. Hierdurch wirkt die Ventilöffnung stromab des ersten Sitzventils als Diffusor, der zulaufseitige Druckschwankungen zusätzlich abbaut oder ein Abbau von Druckschwankungen zumindest unterstützt. Des Weiteren wird durch die Diffusorwirkung ein Unterdruck, d.h. eine Drucksenke, in unmittelbarer Nähe zu dem Schließkörper des ersten Sitzventils erzeugt, der ein Öffnen oder Schließen des ersten Sitzventils unterstützt und somit die Ventildynamik verbessert.

In einer besonders bevorzugten Variante der Druckregelventilvorrichtung weist diese einen Proportional-Elektromagneten auf, d.h. einen Elektromagneten mit einem Anker, dessen Position in Abhängigkeit eines dem Elektromagneten zugeführten elektrischen Stroms änderbar ist. Der Anker dient dabei zur Bewegung der zwei miteinander gekoppelten Schließkörper des ersten und zweiten Sitzventils. Hierdurch ist der am ersten Ablaufbereich anliegende/abgreifbare Druck exakt anhand des zugeführten elektrischen Stromes einstellbar bzw. regelbar. Die vorgeschlagene Druckregelventilvorrichtung ist des weiteren bevorzugt als Hydraulik-Druckregelventilvorrichtung ausgeführt, insbesondere als Hydraulik-Druckregelventilvorrichtung eines Fahrzeuggetriebes. Ein Einsatzgebiet der Druckregelventilvorrichtung ist insbesondere in einer hydraulisch ausgeführten Gangschaltvorrichtung zum Einlegen unterschiedlicher Übersetzungsstufen eines mehrstufigen Automatgetriebes oder automatisierten Schaltgetriebes in einem Fahrzeug, ohne hierauf jedoch beschränkt zu sein. So sind Anwendungen außerhalb eines Automotive-Bereichs ebenso denkbar, beispielsweise in stationären Hydraulikanlagen.

Im Folgenden wird die Erfindung anhand von Beispielen und Zeichnungen näher erläutert, aus welchen weitere vorteilhafte Ausgestaltungen und Merkmale der Erfindung entnommen werden können. Es zeigen jeweils in schematischer Darstellung,
- Fig. 1: einen zweidimensionalen Schnitt durch eine vorgeschlagene Druckregelventilvorrichtung entlang einer Längsachse der Druckregelventilvorrichtung;
- Fig. 2: einen isometrischen Schnitt durch einen Ventilteil einer Druckregelventilvorrichtung gemäß Fig. 1 entlang einer Längsachse der Druckregelventilvorrichtung;
- Fig. 2a: eine vergrößerte Abbildung eines Abschnitts aus Fig. 2 mit einer alternativen Ausführung einer Ventilöffnung des ersten Sitzventils;
- Fig. 3a - 3e: Schnittdarstellungen von alternativen Strömungsführungseinrichtungen entlang einer senkrecht zur Längsachse der Druckregelventilvorrichtung verlaufenden Schnittebene;
- Fig. 4: ein hydraulisches Fluidsystem zur Betätigung eines Getriebeschaltelements eines Fahrzeugs.

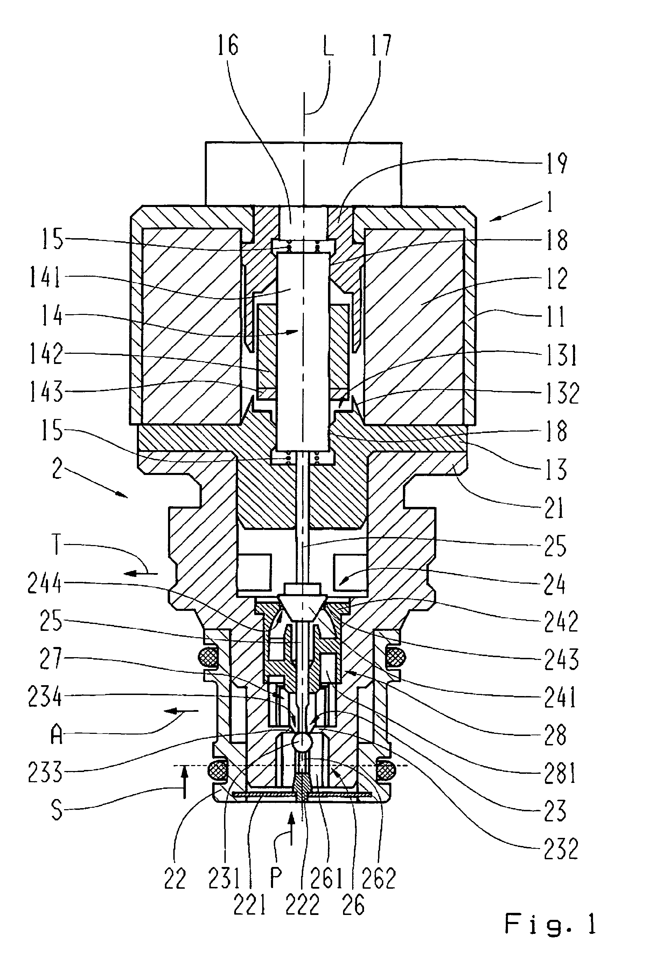

In den Figuren 1 bis 4 sind gleiche oder zumindest funktionsgleiche Bauteile jeweils mit gleichen Bezugszeichen versehen.

Fig. 1 zeigt einen Längsschnitt durch eine als Proportional-Druckregelventil ausgeführte Druckregelventilvorrichtung. Die Druckregelventilvorrichtung setzt sich im Wesentlichen aus einem Elektromagnetteil 1, d.h. einer Aktorik, und einem Ventilteil 2 zusammen, deren Gehäuse 11,21 miteinander fest verbunden sind. Das Elektromagnetteil 1 weist einen Elektromagneten auf, zumindest bestehend aus einer in dem Gehäuse 11 angeordneten elektrischen Magnetspule 12, einem zu der Magnetspule 12 ortsfesten Magnetjoch 13 sowie einem bezüglich der Magnetspule 12 und dem Magnetjoch 13 beweglichen Anker 14. Der Anker 14 ist im dargestellten Fall dreiteilig ausgeführt und umfasst eine Ankerstange 141, einen Ankerkörper 142 sowie eine Antihaftscheibe 143 aus nicht magnetischem Werkstoff, beispielsweise Aluminium. Andere geeignete Ankerbauformen/-arten sind jedoch äquivalent anwendbar. Die Antihaftscheibe 143 verhindert ein magnetisches Festkleben des Ankers 14, wenn die Magnetspule 12 von einem bestromten in einen unbestromten Zustand überführt wird. Zur Ermöglichung eines Druckausgleichs innerhalb des Elektromagnetteils 1 wenn der Anker 14 bewegt wird, ist die Ankerstange 141 bevorzugt mit Druckausgleichsöffnungen, i.e. Bohrungen, versehen.

Die Position des Ankers 14 im unbestromten Zustand der Magnetspule 12 ist mittels zweier elastischer Federelemente 15, hier beispielhaft Druck-Schraubenfedern, innerhalb des Elektromagnetteils vorgegeben. Eine Vorspannung des dem Ventilteil 2 abgewandten Federelementes 15 ist durch ein Vorspannelement 16 einstellbar ist. Dieses kann insbesondere, wie im dargestellten Fall, eingepresst sein, wobei die Vorspannung in Abhängigkeit der Einpresstiefe eingestellt wird oder eingeschraubt sein, wobei die Vorspannung in Abhängigkeit der Einschraubtiefe eingestellt wird. An das Gehäuse 11 des Elektromagnetteils 1 angefügt befinden sich eine elektrische Kontaktiervorrichtung 17, welche mit der Magnetspule 12 elektrisch verbunden ist und über welche die Magnetspule 12 von einer nicht dargestellten, bezüglich der Druckregelventilvorrichtung externen Elektronik bestromt werden kann. Bei einer alternativen Ausführung der Druckregelventilvorrichtung ist diese Elektronik oder zumindest Teile hiervon in den Elektromagnetteil 1 integriert.

Das Magnetjoch 13 weist an einer dem Anker 14 zugewandten Stirnseite eine Tauchstufe 131 mit einer Magnetsteuerkante 132 auf. Durch die Ausgestaltung der Magnetsteuerkante 132, hier in Form eines Konus', kann exakt eingestellt werden, wie groß die auf den Anker 14 einwirkende Magnetkraft bei dem momentan zugeführten elektrischen Strom und bei der momentanen Position des Ankers 14 ist. Bevorzugt ist die Magnetsteuerkante 132 allerdings so ausgeführt, dass die anliegende Magnetkraft proportional zu einer der Spule 12 zugeführten Stromstärke ist, weitestgehend unabhängig davon wo sich der Anker 14 gerade bezüglich des Magnetjochs 13 befindet (Proportional-Elektromagnet). Gegenüber dem Magnetjoch 13 weist der Elektromagnetteil 1 ein ortsfestes Polrohr 19 auf, welches zur besseren Ausrichtung des magnetischen Feldes der Magnetspule 12 dient. Der Anker 14 ist hier beispielhaft mit einem ersten Gleitlager 18 in dem Polrohr 19 und mit einem zweiten Gleitlager 18 in dem Magnetjoch 13 axial in Richtung einer Längsachse L der Druckregelventilvorrichtung beweglich gelagert. Andere Lagerkonzepte sind jedoch äquivalent anwendbar.

An den Elektromagnetteil 1 angefügt weist die Druckregelventilvorrichtung das Ventilteil 2 auf. Dieser verfügt über einen auf das Gehäuse 21 aufgesteckten Filterkorb 22, mit einem einlassseitigen, an der Stirnseite der Druckregelventilvorrichtung befindlichen ersten Filter 221 und einem auslasseitigen, seitlich der Druckregelventilvorrichtung angeordneten zweiten Filter, welcher allerdings nicht dargestellt ist. Der erste Filter 221 dient zur Filtrierung des in die Druckregelventilvorrichtung einströmenden Fluids, während der zweite Filter zur Filtrierung des aus einem Arbeitsanschluss der Druckregelventilvorrichtung hinausströmenden Fluids dient. An dem Filterkorb 22 angeordnet sind O-Ring-Dichtungen, welche einen Zulaufbereich P, einen ersten Ablaufbereich A und einen zweiten Ablaufbereich T der Druckregelventilvorrichtung voneinander fluiddicht trennen. Der Zulaufbereich P, auch Druckversorgungsanschluss genannt, ist an einer axialen Stirnseite der Druckregelventilvorrichtung angeordnet, während der erste Ablaufbereich A, auch Arbeitsdruckanschluss genannt, und der zweite Ablaufbereich T, auch Tankanschluss genannt, radial zu der Längsachse L angeordnet sind. Durch eine entsprechend geeignete Kanalführung innerhalb des Ventilteils 2 kann die Anordnung des Zulaufbereichs P und des ersten und zweiten Ablaufbereichs A, T allerdings untereinander auch vertauscht sein. Eine bevorzugte Flussrichtung des Fluids aus bzw. in den Zulaufbereich P sowie den ersten und zweiten Ablaufbereich A, T ist durch Pfeile angedeutet.

Das Ventilteil 2 weist im Inneren des Gehäuses 21 ein erstes Sitzventil 23 und ein zweites Sitzventil 24 auf, durch welche der Zulaufbereich P, der erste Ablaufbereich A und der zweite Ablaufbereich T strömungstechnisch miteinander verbindbar sind. Hierdurch kann ein Druckniveau in dem ersten Ablaufbereich A gezielt eingestellt werden. Das erste Sitzventil 23 weist einen entlang einer Längsachse des ersten Sitzventils 23 beweglichen Schließkörper 231 auf, im dargestellten Fall in Form einer Kugel, und das zweite Sitzventil 24 weist auch einen entlang einer Längsachse des zweiten Sitzventils 24 beweglichen Schließkörper 241 auf, im dargestellten Fall in Form eines Konus'. Die Längsachsen oder Bewegungsachsen der Sitzventile 23, 24 entsprechen hier der Längsachse L der Druckregelventilvorrichtung. Durch Verwendung von geeigneten Umlenkmitteln können die Längs- bzw. Bewegungsachsen der Sitzventile 23, 24 allerdings auch verschieden sein und beispielsweise parallel oder windschief zueinander liegen. Das Gegenstück zu dem Schließkörper 231 bildet eine bezüglich des Schließkörpers 231 ortsfeste Ventilblende 232. Diese weist eine Steuerkante 233 (Ventilsitz) auf, an welcher der Schließkörper 231 im dargestellten geschlossenen Zustand anliegt, wodurch das erste Sitzventil 23, im Detail eine Ventilöffnung 234 des ersten Sitzventils 23, weitestgehend fluiddicht verschlossen ist. Eine sich zwischen dem Schließkörper 231 und der Steuerkante 233 beim Öffnen des ersten Sitzventils 23 ausbildende erste effektive Ventilöffnungsfläche bestimmt dabei die durch das erste Sitzventil 23 zuströmende Fluidmenge und den Druckabfall an dem ersten Sitzventil 23, wodurch der an dem ersten Ablaufbereich A anliegende bzw. dort abgreifbare Druck beeinflusst wird. Das Gegenstück des Schließkörpers 241 des zweiten Sitzventils 24 bildet ebenfalls eine Ventilblende 242, welche allerdings eine konische Steuerfläche 243 (Ventilsitz) statt einer Steuerkante aufweist. An der Steuerfläche 243 liegt der Schließkörper 241 an, wenn das zweite Sitzventil 24 geschlossen ist, wodurch das zweite Sitzventil 24, im Detail eine Ventilöffnung 244 des zweiten Sitzventils 24, weitestgehend fluiddicht geschlossen ist. Eine sich zwischen dem Schließkörper 241 und der Steuerfläche 243 beim Öffnen des zweiten Sitzventils 24 ausbildende zweite effektive Ventilöffnungsfläche bestimmt dabei die durch das zweite Sitzventil 24 abströmende Fluidmenge, wodurch ebenfalls der an dem ersten Ablaufbereich A anliegende bzw. dort abgreifbare Druck beeinflusst wird. Da das durch das zweite Sitzventil 24 strömende Fluid in der Regel ungenutzt in ein Fluidreservoir geleitet wird, wird die durch das zweite Sitzventil 24 fließende Fluidmenge häufig auch als Leckage bezeichnet. In der dargestellten Konfiguration der Druckregelventilvorrichtung liegt der Schließkörper 231 des ersten Sitzventils 23 stromauf der Ventilöffnung 234 und der Schließkörper 241 des zweiten Sitzventils 24 stromab der Ventilöffnung 244.

Dem Fachmann ist hierbei klar, dass die Sitzventile 23, 24, im Detail die Schließkörper 231, 241 und die korrespondierenden Ventilblenden 232, 242, auch auf eine andere geeignete Art ausgeführt sein können. Beispielsweise kann das zweite Sitzventil 24 als Kugelventil mit einem kugelförmigen Schließkörper analog zu dem dargestellten ersten Sitzventil 23 ausgeführt sein. Ebenso kann das erste und/oder das zweite Sitzventil 23, 24 als Flachventilsitz oder als Kegelventilsitz ausgeführt sein (analog zum dargestellten zweiten Sitzventil 24). Im dargstellten Fall weist das erste Sitzventil 23 eine Steuerkante 233 auf, an welcher der Schließkörper 231 im geschlossenen Zustand anliegt, d.h. es liegt ein im Wesentlichen linienförmiger Kontakt zwischen Schließkörper 231 und Ventilblende 232 vor, während das zweite Sitzventil 24 eine Steuerfläche 24 aufweist, an welcher der Schließkörper 241 im geschlossenen Zustand anliegt, d.h. es liegt ein im wesentlichen flächenförmiger Kontakt zwischen Schließkörper 241 und Ventilblende 242 vor. Es ist klar, dass die Sitzventile 23, 24 allerdings auch so ausgeführt sein können, dass beide oder eines der beiden Sitzventile 23, 24 einen flächenförmigen Kontakt oder einen linienförmigen Kontakt zwischen Schließkörper 231, 241 und Ventilblende 232, 242 aufweisen. Zur Erzeugung eines flächigen Kontakts verfügt die Ventilblende über eine der Oberflächenform des Schließkörpers komplementäre Steuerfläche, und zur Darstellung eines linienförmigen Kontakts verfügt die Ventilblende über eine der Oberflächenform des Schließkörpers komplementäre Steuerkante.

Die Schließkörper 231, 241 der Sitzventile 23, 24 werden mittels einer entlang der Längsachse L beweglichen Stößelstange 25 betätigt, mit welcher zumindest der Schließkörper 241 des ersten Sitzventils 24 verbunden ist. Diese Verbindung kann sowohl ortfest (wie dargestellt), als auch flexibel durch ein zwischengeschaltetes elastisches Element, beispielsweise ein zwischen Schließkörper 241 und Stößelstange 25 angeordnete Druckfeder, realisiert sein. Der Schließkörper 231 kann entweder ebenfalls so mit der Stößelstange 25 verbunden sein oder komplett von der Stange 25 getrennt sein, wobei die Stößelstange 25 den Schließkörper 231 dann zum Öffnen des ersten Sitzventils 23 lediglich von der Ventilblende 232 wegdrückt und dabei die Ventilöffnung 234 freigibt. Das Schließen des ersten Sitzventils 23 erfolgt bei einem bezüglich der Stößelstange 25 losen Schließkörper 231 ausschließlich durch den Druck des von dem Zulaufbereich P einströmenden Fluids. Durch die Stößelstange 25 sind die Schließkörper 231, 241 so miteinander gekoppelt, dass die Sitzventile 23, 24 ausschließlich wechselseitig betätigbar sind. Dies bedeutet einerseits, dass falls das erste Sitzventil 23 geöffnet wird, das zweite Sitzventil 24 geschlossen wird und andererseits, dass falls das erste Sitzventil 23 geschlossen wird, das zweite Sitzventil 24 geöffnet werden kann. Die Anordnung und Koppelung der Sitzventile 23, 24 entspricht somit einer hydraulischen Halbbrückenschaltung.

Die Stößelstange 25 durchdringt das Magnetjoch 13 und liegt an einer dem Ventilteil 2 zugewandten Stirnseite des Ankers 14 an. Sie kann mit dem Anker 14 alternativ auch fest oder über ein elastisches Element, beispielsweise einer Druckfeder etc., verbunden sein. Die Öffnung, in welcher die Stößelstange 25 das Magnetjoch 13 durchdringt, ist bevorzugt fluiddicht und als Führung der Stößelstange 25 ausgeführt. Eine magnetkraftinduzierte axiale Bewegung des Ankers 14 in Richtung des Ventilteils 2 wird somit direkt auf die Stößelstange übertragen, wodurch diese mitbewegt wird und dabei ein Öffnen des ersten Sitzventils 23 und Schließen des zweiten Sitzventils 24 bewirkt. Im Wesentlichen eine Federkraft des in Richtung des Ventilteils 2 gelegenen Federelements 15 und eine auf den Schließkörper 231 wirkende Fluiddruckkraft bewirken hierbei mit zunehmender Auslenkung des Ankers 14 und der Stößelstange 25 eine steigende Gegenkraft gegen die Magnetkraft, wodurch sich das erste Sitzventil 23 nur so weit öffnet, bzw. das zweite Sitzventil nur so weit schließt bis sich zwischen Magnetkraft und Gegenkraft ein Kräftegleichgewicht einstellt. In Abhängigkeit der Öffnungsweiten der Sitzventile 23, 24 bildet sich in dem ersten Ablaufbereich A dabei ein bestimmter Fluiddruck aus, der unterhalb des an dem Zulaufbereich P anliegenden Fluiddrucks liegt und oberhalb des an dem zweiten Ablaufbereichs T anliegenden Fluiddrucks liegt. Der Fluiddruck im zweiten Ablaufbereich T entspricht dabei in der Regel einem atmosphärischen Druck, da dieser normalerweise an ein unter atmosphärischem Druck stehendes Fluidreservoir angeschlossen ist. Da die auf den Anker 14 wirkende Magnetkraft von der Stärke des der Magnetspule 12 zugeführten elektrischen Stroms abhängig ist und die Gegenkraft von einer Auslenkung des Ankers 14 abhängig ist, kann somit sehr genau anhand des zugeführten elektrischen Stromes ein Druckniveau an dem zweiten Ablaufbereich A eingestellt bzw. eingeregelt werden.

Hierbei sei angemerkt, dass die in Fig. 1 dargestellten Positionen bzw. Schaltstellungen des Ankers 14, der Stößelstange 25 und der Sitzventile 23, 24 den Positionen/Schaltstellungen in einer Ausgangsstellung der Druckregelventilvorrichtung entsprechen, in der die Magnetspule 12 unbestromt ist und daher keine Magnetkraft auf den Anker 14 wirkt. Da das erste Sitzventil 23 hierbei voll geschlossen und das zweite Sitzventil 24 voll geöffnet ist und somit kein Fluid die Druckregelventilvorrichtung von der Zulaufseite P her durchströmen kann (ein Druck ist an dem ersten Ablaufbereich auf "0" eingestellt), handelt sich bei der dargestellten Druckregelventilvorrichtung um eine normally-closed- Druckregelventilvorrichtung mit einer steigenden Ventilkennlinie. D.h. mit steigender Stärke des zugeführten Stroms öffnet das erste Sitzventil 23 und schließt das zweite Sitzventil 24, wodurch der an dem ersten Ablaufbereich A abgreifbare Druck steigt.

Die dargestellte Druckregelventilvorrichtung kann auch so umgestaltet werden, dass diese einer normally-open- Druckregelventilvorrichtung mit einer fallenden Ventilkennlinie entspricht. Hierbei ist im unbestromten Ausgangszustand der Druckregelventilvorrichtung das erste Sitzventil 23 voll geöffnet und das zweite Sitzventil 24 voll geschlossen, wodurch Fluid von dem Zulaufbereich P ausschließlich zu dem ersten Auslaufbereich A fließen kann und dort ein maximaler Druck anliegt. Mit zunehmender Bestromung der Magnetspule 12 wird das erste Sitzventil 23 geschlossen und das zweite Sitzventil 24 geöffnet, und der an dem ersten Ablaufbereich P abgreifbare Druck sinkt entsprechend. Hierzu ist das erste und zweite Sitzventil 23, 24 so umkonfiguriert, dass der Schließkörper 231 stromab der Ventilöffnung 234 und der Schließkörper 241 stromauf der Ventilöffnung 244 angeordnet ist, während das Magnetjoch 13 mit der Tauchstufe 131 und der Steuerkante 132 auf der dem Ventilteil 2 abgewandten Seite des Elektromagnetteils 1 angeordnet sind.

Gemäß Fig. 1 ist zulaufseitig, d.h. stromauf, des ersten Sitzventils 23 im Zulaufbereich P eine erste Strömungsführungseinrichtung 26 angeordnet, welche dem zufließenden Fluid im Bereich des ersten Sitzventils 23 eine vorgegebene Strömungscharakteristik aufprägt. Hierdurch kann insbesondere sowohl der Strömungswiderstand des Schließkörpers 231 des ersten Sitzventils 23 reduziert werden, als auch die Druckregelventilvorrichtung unempfindlicher gegenüber Anregungen oder Störungen im Fluidfluss, beispielsweise Druckschwankungen, gestaltet werden. Durch die Aufprägung einer vorgegebenen Strömungscharakteristik kann die Druckregelventilvorrichtung auch unabhängiger von unterschiedlichen Fluidsystemen eingesetzt werden, da das zuströmende Fluid dann unabhängig des Fluidsystems vor einem Kontakt mit den Sitzventilen 23, 24 in vorgesehene Bahnen geleitet wird, d.h. die vorgegebene Strömungscharakteristik aufweist. Die Druckregelventilvorrichtung ist somit einfacher und ohne Adaptieraufwand bei unterschiedlichen Fluidsystemen einsetzbar.

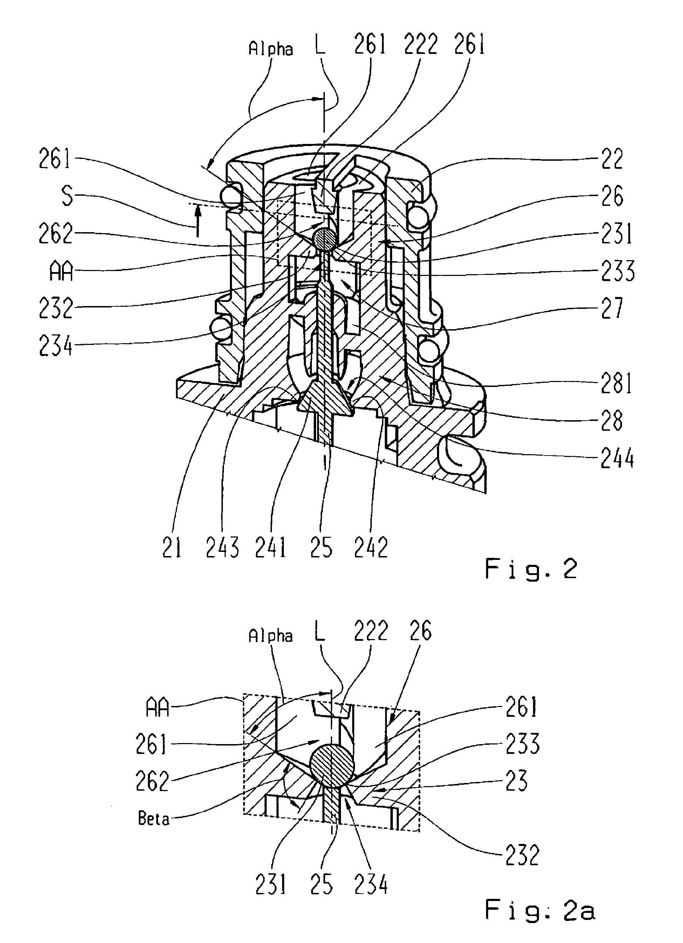

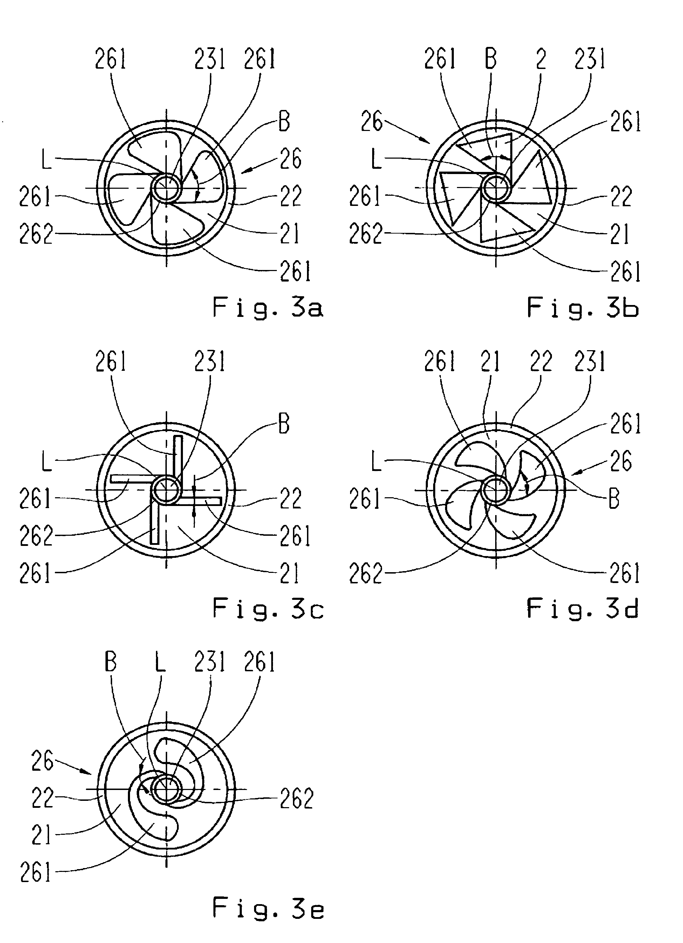

Im dargestellten Fall besteht die Strömungsführungseinrichtung 26 aus mehreren Strömungsführungskanälen 261, die sich in Form von Vertiefungen entlang der Längsachse L der Druckregelventilvorrichtung in dem Gehäuse 21 des Ventilteils 2 befinden. Entlang einer senkrecht zur Längsachse L gelegenen Schnittebene S weist jeder der Strömungsführungskanäle 261 einen Querschnitt in Form eines Propellerblattes auf (siehe Fig. 2 und 3d). Mit zunehmender Nähe zu der Längsachse L verringert sich folglich eine Breite und daher eine Durchströmfläche jedes Strömungsführungskanals 261, wodurch das Fluid beim Durchströmen der Strömungsführungskanäle 261 mit zunehmender Nähe zu der Längsachse L beschleunigt wird. Dies wird dadurch verstärkt, dass die Strömungsführungskanäle 261 stromabwärts in Richtung der Sitzventilöffnung gemeinsam in Form eines Trichters zulaufen (siehe Fig. 2). Die Trichterform wird hier durch in axialer Richtung zur Längsachse L gelegene Endbereiche der Strömungsführungskanäle 261 gebildet, welche zur Längsachse L geneigt zusammenlaufen.

Zentral der Strömungsführungseinrichtung 26, hier beispielsweise koaxial zur Längsachse L, befindet sich im Zulaufbereich P eine insbesondere kreisrunde Öffnung 262, beispielsweise eine Bohrung, innerhalb welcher der Schließkörper 231 des ersten Sitzventils 23 beweglich angeordnet ist und in welche die Strömungsführungskanäle 261 münden. Die Öffnung 262 wird stromauf durch einen Stopfen 222 verschlossen, der ein Herausfallen des Schließkörpers 231 aus der Druckregelventilvorrichtung verhindert. Im gezeigten Ausführungsbeispiel ist der Stopfen 222 ein Teil des Filterkorbs 22, kann jedoch ebenso als eigenständiges Bauteil oder Teil der Strömungsführungseinrichtung 26 oder des Gehäuses 21 ausgeführt sein. Nicht dargestellt ist, dass der Stopfen 222 bevorzugt strömungsgünstig ausgeführt ist, insbesondere durch eine tropfenförmige oder spitzkegelförmige Ausgestaltung. Bevorzugt bildet der Stopfen 222 daher einen Teil der Strömungsführungseinrichtung 26. Dies kann auch dadurch erfolgen, dass der Stopfen 222 ebenfalls Strömungsführungskanäle, Leitschaufeln oder dergleichen aufweist. Der Stopfen 222 und das Gehäuse 21 können zudem so ausgeführt sein, dass sich die Strömungsführungseinrichtung 26 erst beim Zusammenführen dieser Bauteile bildet, d.h. dass beide Bauteile 21, 222 komplementäre Bestandteile der Strömungsführungseinrichtung 26 aufweisen, welche erst beim Zusammenführen der Bauteile 21, 222 die eigentliche Strömungsführungseinrichtung 26 bilden.

In einer ebenfalls nicht gezeigten Ausführung der Druckregelventilvorrichtung wird die Strömungsführungseinrichtung 26 aus einer Hülse gebildet, welche insbesondere bei der Montage der Druckregelventilvorrichtung axial in das Gehäuse 21 eingefügt, beispielsweise eingepresst oder eingeklebt, wird. Diese Hülse kann auch Teile des ersten Sitzventils 23, insbesondere die Ventilblende 232, aufweisen oder das gesamte erste Sitzventil 23 integrieren.

Die Strömungsführungskanäle 261 münden zumindest annähernd tangential zu der Öffnung 262 bzw. der Ventilöffnung 234 des ersten Sitzventils 23 in den Zulaufbereich P, d.h. Austrittsöffnungen der Strömungsführungskanäle 261 münden seitlich versetzt zu der Längsachse L in die Öffnung 262. Hierdurch wird das in die Öffnung 262 und Ventilöffnung 234 strömende Fluid in einen Drall um die Längsachse L versetzt, der eine besonders vorteilhafte Ausrichtung und Stabilisierung der Strömung bewirkt. Im Detail bildet das in die Druckregelventilvorrichtung strömende Fluid an dem Schließkörper 231 strömungswiderstandsarm eine tangential und dünnfilmig entlang der Oberfläche des Schließkörpers 231 fließende Strömung aus. Diese überträgt Druckschwankungen oder andere Störungen/Anregungen nicht oder nur zu einem sehr geringen Teil auf den Schließkörper 23. Des Weiteren bewirkt die Drallströmung eine Stabilisierung der Position des Schließkörpers 23 auf der Drehachse der Strömung, d.h. im gezeigten Fall auf der Längsachse L. Der Schließkörpers 23 wird daher auch bei einer Anregung durch äußere Kräfte, beispielsweise bei mechanischen Schwingungen auf die Gehäuse 11 und 21, stabil in der Drallströmung gehalten.

Bevorzugt, jedoch nicht zwingend, sind die Strömungsführungseinrichtungen 26, 28 wie dargestellt so ausgeführt, dass die jeweils erzeugten Drallströmungen den gleichen Drehsinn haben.

Nach Durchströmen des ersten Sitzventils 23 gelangt das Fluid in einen Zwischenraum 27, wo sich die Fluidstömung in eine erste Teilströmung hin zu dem ersten Ablaufbereich A und eine zweite Teilströmung hin zu dem zweiten Sitzventil 24 aufteilt. Das Mengenverhältnis der ersten und zweiten Teilströmung wird durch die Öffnungsweite des zweiten Sitzventils 24, im Detail durch die effektive Ventilöffnungsfläche des zweiten Sitzventils 24, bestimmt. Der erste Ablaufbereich A weist seitliche Öffnungen im Gehäuse 21 des Ventilteils 2 zum Abfluss der ersten Teilströmung auf. Analog weist der zweite Ablaufbereich seitliche Öffnungen in dem Gehäuse 21 zum Ablauf der zweiten Teilströmung auf.

Optional ist, wie in Fig. 1 dargestellt, in dem Zwischenraum 27 stromauf des zweiten Sitzventils 23 strömungstechnisch zwischen dem ersten und zweiten Ablaufbereich A, T eine zweite Strömungsführungseinrichtung 28 angeordnet. Diese ist derart ausgeführt, dass das zu dem zweiten Auslaufbereich T strömende Fluid, d.h. die zweite Teilströmung, im Bereich des zweiten Sitzventils 24 in einen Drall um die Längs- oder Bewegungsachse des ersten Sitzventils 23, hier der Längsachse L der Druckregelventilvorrichtung, versetzt wird. Die zweite Strömungsführungseinrichtung 28 besteht hierbei im Wesentlichen aus einem Drallerzeuger mit mehreren Strömungsführungskanälen 281 und der Ventilblende 241 des zweiten Sitzventils 24. Die Strömungsführungskanäle 281 verlaufen hierbei jeweils helixförmig und konzentrisch zu der Längsachse L. Die Ventilblende 242 läuft ausgehend von einem Auslass der Strömungsführungskanäle 281 zu der Ventilöffnung 244 des zweiten Sitzventils 24 düsenförmig zu, wodurch eine Geschwindigkeit der Drallströmung stromab mit zunehmender Nähe zu der Ventilöffnung 244 zunimmt (Drehimpulserhaltung). Nach dem Passieren des zweiten Sitzventils 24 gelangt das Fluid dann in den zweiten Ablaufbereich T. Häufig ist dieser einem unter atmosphärischem Umgebungsdruck stehenden Fluidreservoir zugeordnet. Durch die Ausführung der Druckregelventilvorrichtung mit einer zweiten Strömungsführungseinrichtung 28 kann eine Dynamik der Druckregelventilvorrichtung gesteigert werden, bei einer gleichzeitigen Reduktion der Leckage.

Grundsätzlich kann die in Fig. 1 gezeigte zweite Strömungsführungseinrichtung 28 auch anders ausgeführt sein und beispielsweise Leitschaufeln oder dergleichen zur Erzeugung der Drallströmung aufweisen. Oder die zweite Strömungsführungseinrichtung 28 kann entfallen, insbesondere sofern eine erhöhte Leckage bzw. eine geringere Ventildynamik zulässig oder erwünscht ist. Die zweite Strömungsführungseinrichtung 28 kann allerdings auch analog zu einer der hier beschriebenen Ausführungsformen der ersten Strömungsführungseinrichtung 26 ausgeführt sein. Somit können die erste und zweite Strömungsführungseinrichtung 26, 28 beispielsweise auch gleich ausgeführt sein.

Die zweite Strömungsführungseinrichtung 28 ist im gezeigten Ausführungsbeispiel einteilig ausgeführt, selbstverständlich können der Drallerzeuger und die Ventilblende 242 auch ein mehrteiliges Bauteil bilden. Alternativ bilden der Drallerzeuger und/oder die Ventilblende 242 ein einteiliges Bauteil mit dem Gehäuse 21. Des Weiteren kann zur Betätigung, i.e. Linearbewegung, der Stößelstange 25 anstatt des Elektromagnetteils 1 eine andere geeignete Aktorik vorgesehen sein, beispielsweise eine in linearer Richtung wirkende hydraulische, pneumatische oder anderweitige elektrische Aktorik.

Fig. 2 zeigt eine vergrößerte isometrische Ansicht des Ventilteils 2 der Druckregelventilvorrichtung aus Fig. 1. Das Elektromagnetteil 1 ist hier nicht dargestellt. Wie aus Fig. 2 hervorgeht, weist die Ventilsteuerkante 233 einen stumpfen Winkel auf. Stromab der Ventilsteuerkante 233 ist die Ventilöffnung 234 zunächst zylinderförmig ausgeführt. Sie weitet sich im Anschluss an diese Zylinderform allerdings diffusorartig zu dem Zwischenraum 27 hin auf. Die Strömungsführungskanäle 261 sind als sich gerade entlang der Längsrichtung L erstreckende Vertiefungen in dem Gehäuse 21 ausgeführt, wobei deren Querschnitt auf einer Schnittebene S senkrecht zur Längsrichtung L propellerförmig ist. Andere Querschnittsformen sind, sofern geeignet, denkbar. Die Strömungsführungskanäle 261 können insbesondere statt gerade entlang der Längsachse L, auch helixförmig um die Längsachse L verlaufen, gleich oder ähnlich zu den Strömungsführungskanälen 281 der zweiten Strömungsführungseinrichtung 28.

Im gezeigten Ausführungsbeispiel laufen die Strömungsführungskanäle 261 stromab in Richtung der Ventilöffnung gemeinsam trichterförmig zu. Hierzu sind Endbereiche, hier gerade Endflächen, der Strömungsführungskanäle 261 bezüglich der Längsachse L geneigt. Der Öffnungswinkel ALPHA der Trichterform beträgt im dargestellten Fall etwa 60°, bevorzugt beträgt der Öffnungswinkel allerdings ca. 60°±10°. Dabei kann die Trichterform, d.h. hier die Endbereiche der Strömungsführungskanäle 261, auch abgerundet und somit konvex oder konkav sein. Der Öffnungswinkel entspricht dann einem mittleren Steigungswinkel der Trichterform bezüglich der Längsachse L.

Fig. 2a zeigt eine Vergrößerung des Ausschnitts AA aus Fig. 2, allerdings mit einer alternativ ausgeführten Ventilsteuerkante 233 und Ventilöffnung 234. Gegenüber der Ausführung gemäß Fig. 1 und 2 ist die Ventilsteuerkante 233 des ersten Sitzventils 23 hier rechtwinklig ausgeführt (Winkel BETA), mit keiner oder einer vernachlässigbar kleinen Fase, d.h. die Ventilsteuerkante 233 ist "scharf" ausgeführt. Hierdurch kann ein vorteilhafter geringer Strömungswiderstand beim Durchtritt des Fluids durch das erste Sitzventil 23 bewirkt werden. Die Ventilöffnung 234 des ersten Sitzventils 23 weitet sich stromabwärts der Ventilsteuerkante 233 kontinuierlich diffusorartig auf. Die hierbei hervorgerufene Diffusorwirkung bewirkt eine Dämpfung von stromauf oder stromab des Zulaufbereichs P induzierten Druckschwingungen sowie einen Aufbau einer Drucksenke in unmittelbarer Nähe zu dem Schließkörper 231, was eine Schließ- oder Öffnungsbewegung des Schließkörpers 231 unterstützt und somit die Ventildynamik erhöht. Statt über gerade Flächen kann die Ventilöffnung 234 stromab der Ventilsteuerkante 233 auch über gekrümmte Flächen verfügen, d.h. diese können konvex oder konkav sein. Ebenso kann die Ventilsteuerkante 233 statt rechtwinklig auch spitzwinklig ausgeführt sein.

Die Figuren 3a bis 3e zeigen beispielhaft alternative Ausführungen von Querschnitten der Strömungsführungskanäle 261 aus Fig. 1 und 2 entlang der Schnittebene S.

Gemäß Fig. 3a weist die Strömungsführungseinrichtung 26 vier propellerförmige Strömungsführungskanäle 261 auf. Eine Breite bzw. ein Strömungsquerschnitt B der Strömungsführungskanäle 261 nimmt mit zunehmender Nähe zu einer Längsachse L der Druckregelventilvorrichtung, insbesondere einer Längs- oder Bewegungsachse des ersten Sitzventils, ab. Die Strömungsführungskanäle 261 münden jeweils mit einer Austrittsöffnung in die gemeinsame, hier koaxial entlang der Längsachse L verlaufende Öffnung 262, innerhalb welcher der Schließkörper 231 des ersten Sitzventils beweglich angeordnet ist. Zur Erzielung einer Drallströmung, im dargestellten Fall eine Strömung mit einem im Uhrzeigersinn gerichteten Drehsinn, sind die Austrittsöffnungen gegenüber der Längsachse L seitlich versetzt, derart, dass diese tangential an der Längsachse L vorbei weisen. Das die Strömungsführungskanäle 261 verlassende Fluid strömt demnach tangential oder zumindest annähernd tangential bezüglich der Ventilöffnung des ersten Sitzventils in die Öffnung 262 ein, bevorzugt in Form eines dünnen Films entlang des Schließkörpers 231. Mit anderen Worten befindet sich an der Basis der jeweils propellerblattförmigen Strömungsführungskanäle 261 eine Fluidaustrittsöffnung zu einer gemeinsamen Öffnung 262 der Strömungsführungseinrichtung 26, welche stromab in die Ventilöffnung des ersten Sitzventils übergeht, wobei der Mündungsort der Austrittsöffnung in die Öffnung 262 so gewählt ist, dass sich eine Drallströmung stromab der Strömungsführungskanäle 261 im Bereich des ersten Sitzventils ausbildet.

Im Gegensatz zu der Strömungsführungseinrichtung 26 aus Fig. 3a weist die Strömungsführungseinrichtung 26 aus Fig. 3b propellerförmige Strömungsführungskanäle 261 mit im Wesentlichen dreiecksförmigen Querschnitten auf. Die Ecken der Dreiecksform können selbstverständlich abgerundet, d.h. mit einem Innenradius versehen sein.

Die Strömungsführungseinrichtung 26 aus Fig. 3c unterscheidet sich von der Strömungsführungseinrichtung 26 aus Fig. 3a dadurch, dass die Strömungsführungskanäle 261 vierecksförmige Querschnitte, hier im Besonderen rechtecksförmige Querschnitte aufweisen. Die Breite B der Strömungsführungskanäle 261 ist dementsprechend konstant. Auch hier können die Ecken der Vierecksform abgerundet sein.

Die Strömungsführungseinrichtung 26 aus Fig. 3d entspricht im Wesentlichen der Strömungsführungseinrichtung 26 aus Fig. 3a, wobei die Strömungsführungskanäle 261 gegenüber denen aus Fig. 3a allerdings stärker verdreht sind. D.h. hier ist ein bezüglich der Längsachse L innerer Bereich der Strömungsführungskanäle 261 gegenüber einem äußeren Bereich in Richtung des vorgesehenen Drehsinns der Fluidströmung versetzt, wodurch eine Verbesserung der Drallerzeugungswirkung der Strömungsführungseinrichtung 26 erzielt wird. Die Strömungsführungskanäle 261 verlaufen hierdurch jeweils spiralförmig auf die Öffnung 262 bzw. die Ventilöffnung des ersten Sitzventils zu. Diese Ausführung entspricht der in Fig. 2 dargestellten Ausführung.

Die Strömungsführungseinrichtung 26 gemäß Fig. 3e weist gegenüber Fig. 3d eine stärkere spiralförmige Verdrehung der Strömungsführungskanäle 261 auf, außerdem sind lediglich zwei Strömungsführungskanäle 261 vorgesehen.

Die Strömungsführungskanäle 261, insbesondere die in Fig. 3a bis 3e dargestellten, können wie in Fig. 1 und 2 gezeigt als im Wesentlichen entlang der Längsachse L verlaufende Vertiefungen ausgeführt sein, d.h. mit im Wesentlichen parallel zu der Längsachse L ausgerichteten Seitenwänden. Alternativ können die Strömungsführungskanäle 261 auch helixförmig ausgeführt sein und insbesondere koaxial um die Längsachse L herum verlaufen. Statt zwei bzw. vier Strömungsführungskanälen 261 können jeweils auch drei, fünf, sechs, etc. Kanäle 261 vorgesehen sein. Eine Strömungsführungseinrichtung 26 mit lediglich einem Strömungsführungskanal 261 ist ebenso möglich. Eine gleichmäßige Verteilung der Strömungsführungskanäle 261 um die Längsachse L, d.h. gleiche Abstände zwischen den Strömungsführungskanälen 261, ist bevorzugt, jedoch nicht zwangsläufig vorgesehen. Insbesondere sind die Strömungsführungskanäle 261 in Form und Position symmetrisch zueinander ausgeführt.

Die Strömungsführungskanäle 261 können wie in den Figuren dargestellt längliche Austrittsöffnungen aufweisen, welche entlang der gesamten axialen Länge der Strömungsführungseinrichtung 26 in die Öffnung 262 münden. Es kann jedoch auch zweckmäßig sein, dass die Strömungsführungskanäle 261 lediglich in bestimmten Bereichen in die Öffnung 262 münden, um eine besonders geeignete Fluidströmung zu erzielen. Beispielsweise können die Strömungsführungskanäle 261 auch nur in einem stromab gelegenen Endbereich der Strömungsführungseinrichtung 26, insbesondere in unmittelbarer Nähe zu der Ventilöffnung des ersten Sitzventils, in die Öffnung 262 münden, um eine besonders gute Drallerzeugungswirkung zu erzielen.

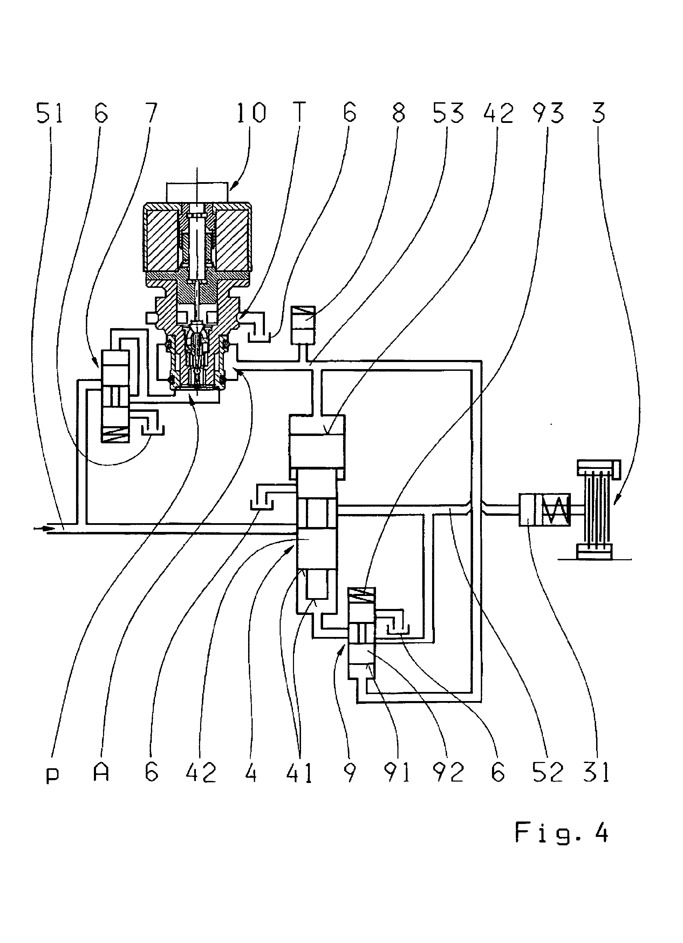

Fig. 4 zeigt ein hydraulisches Fluidsystem zur Betätigung eines Getriebeschaltelements 3 eines Fahrzeugs, beispielsweise eines ein- oder mehrstufigen Fahrzeuggetriebes. Die in Fig. 1 gezeigte und in Fig. 4 mit dem Bezugszeichen 10 gekennzeichnete Druckregelventilvorrichtung dient zur hydraulischen Vorsteuerung eines Schaltelementventils 4, welches das Getriebeschaltelement 3 mit einem hydraulischen Schaltdruck versorgt. In Fig. 4 ist die Druckregelventilvorrichtung daher als Hydraulik-Druckregelventilvorrichtung ausgeführt. Die Druckregelventilvorrichtung kann allerdings auch zur Druckregelung von anderen Fluiden genutzt werden, insbesondere flüssigen Fluiden wie beispielsweise Wasser oder Bremsflüssigkeit. Fig. 4 dient lediglich zur Illustration einer bevorzugten Anwendung der vorgeschlagenen Druckregelventilvorrichtung, andere Anwendungsmöglichkeiten sind ebenso denkbar. Die Fig. 4 ist daher nicht einschränkend zu verstehen.

Das hydraulische Fluidsystem weist eine Zuleitung 51 auf, durch welche es mit unter einem Hauptsystemdruck stehenden Hydraulikfluid versorgt wird. Hierzu befindet sich stromauf der Zuleitung 51 eine nicht gezeigte Hydraulikpumpe, welche das Hydraulikfluid einem Fluidreservoir 6 entnimmt. Die Zuleitung 51 teilt sich in einen ersten Zweig, der direkt zu dem Schaltelementventil 4 führt und einen zweiten Zweig zur Vorsteuerung des Schaltelementventils 4, der über ein Druckreduzierventil 7 zu der Druckregelventilvorrichtung 10 führt.

Von dem Schaltelementventil 4 führt eine Schaltelementleitung 52 einerseits zu einem einfach wirkenden Zylinder 31 des Schaltelements 3, welcher das hier als Lamellenbremse ausgeführte Schaltelement 3 durch Aus- bzw. Einfahren einer Kolbenstange im Schließ- bzw. Öffnungssinne betätigt, andererseits führt die Schaltelementleitung 52 im Sinne einer Regelungsleitung über ein Halteventil 9 zu einer ersten axialen Steuerfläche 41 eines Ventilschiebers 42 des Schaltelementventils 4.

Das Druckreduzierventil 7 im zweiten Zweig der Zuleitung 51 setzt den Hauptsystemdruck in bekannter Weise auf einen Vordruck herab, welcher dem Zulaufbereich P der Druckregelventilvorrichtung 10 zugeführt wird. Hierbei abfallendes Fluid wird in das Reservoir 6 zur Wiederverwendung zurückgeführt.

Die Druckregelventilvorrichtung 10 regelt wie obig beschrieben den Vordruck in Abhängigkeit der Stärke eines zugeführten elektrischen Stroms auf einen Vorsteuerdruck herunter, welcher durch eine Vorsteuerleitung 53 an dem ersten Ablaufbereich A der Druckregelventilvorrichtung 10 abgegriffen wird. Das hierbei über den zweiten Ablaufbereich T der Druckregelventilvorrichtung 10 abfallende (Leckage-)Fluid wird ebenfalls in das Reservoir 6 zurückgeführt.

In der Vorsteuerleitung 53 ist ein federelastisch wirkender Druckdämpfer 8 angeordnet, welcher Druckschwingungen in der Vorsteuerleitung 53 reduziert und eine Resonanzfrequenz des Fluidsystems in unkritischere Frequenzbereiche verschiebt. Verbleibende Druckschwingungen im Zulauf- oder ersten Ablaufbereich A, P der Druckregelventilvorrichtung 10 werden durch die vorgeschlagene erste Stromführungseinrichtung der Druckregelventilvorrichtung 10 weiter abgeschwächt oder vollständig eliminiert. Hierdurch kann eine Baugröße des Druckdämpfers 8 verringert oder auf diesen komplett verzichtet werden.

Stromab zweigt sich die Vorsteuerleitung 53 einerseits in einen Leitungsabschnitt auf, der zu einer zweiten axialen Steuerfläche 43 des Ventilschiebers 42 des Schaltelementventils 4 führt und andererseits in einen Leitungsabschnitt, der zu einer axialen Steuerfläche 91 eines Ventilschiebers 92 des Halteventils 9 mündet. Gegenüber der Steuerfläche 91 weist das Halteventil 9 ein elastisches Element 93 auf, hier eine Druckfeder, welches mit zunehmender Auslenkung des Ventilschiebers 92 eine zunehmende Gegenkraft gegen die an der Steuerfläche 91 anliegende Kraft des Vorsteuerdrucks bewirkt.

Der an der ersten Steuerfläche 41 des Schaltelementventils 4 anliegende Druck ist somit direkt durch den Vorsteuerdruck einstellbar, während der an der zweiten Steuerfläche 43 anliegende Druck indirekt über das Halteventil 9 durch den Vorsteuerdruck einstellbar ist.

Die zweite Steuerfläche 43 des Schaltelementventils 4 ist an dem Ventilschieber 42 diametral gegenüber der ersten Steuerfläche 41 angeordnet und weist eine größere axiale Fläche als die erste Steuerfläche 41 auf. Hierdurch wird der Ventilschieber 42 entsprechend einer resultierenden Kraft zwischen den Steuerflächen 41, 43 verschoben, wodurch der in der Schaltelementleitung 52 anliegende und zur Betätigung des Schaltelements 3 genutzte Schaltdruck in Abhängigkeit des Vorsteuerdrucks einstellbar ist.

Alternativ kann das Fluidsystem zur Betätigung des Schaltelements 3 auch als Fluidsystem mit Direktsteuerung statt Vorsteuerung ausgeführt sein, wobei das Schaltelementventil 4 dann entsprechend der Druckregelventilvorrichtung 10 ausgeführt ist. Hierdurch können die für die Vorsteuerung benötigten Elemente 7, 9, 10, 53 entfallen. Allerdings sind die zur Betätigung des Schaltelementventils 4 notwendigen elektrischen Ströme dann höher, als bei dem gezeigten Fluidsystem mit Vorsteuerung, wodurch ein Elektromagnetteil 1 des Schaltelementventils 4 dann größer ausgeführt ist.

Selbstverständlich kann das Getriebeschaltelement 3 beliebig anders ausgeführt sein, beispielsweise als Lamellenkupplung, Klauenkupplung oder -bremse, gegebenenfalls zusätzlich mit einer Synchronisierung, oder als Einscheibenkupplung oder -bremse. Das Schaltelement 3 dient bevorzugt zum Einlegen unterschiedlicher Übersetzungsstufen in einem mehrstufigen Fahrzeuggetriebe oder zum An- oder Abkoppeln von Fahrzeuggetriebewellen, beispielsweise zum An- oder Abkoppeln einer Getriebeeingangswelle, einer Fahrzeugallradwelle oder einer Fahrzeugachswelle.

### Bezugszeichen

- 1: Elektromagnetteil
- 10: Druckregelventilvorrichtung
- 11: Gehäuse
- 12: Magnetspule
- 13: Magnetjoch
- 131: Tauchstufe
- 132: Magnetsteuerkante
- 14: Anker
- 141: Ankerstange
- 142: Ankerkörper
- 143: Antihaftscheibe
- 15: Federelement
- 16: Vorspannelement
- 17: Kontaktiervorrichtung
- 18: Lager
- 19: Polrohr

- 2: Ventilteil
- 21: Gehäuse
- 22: Filterkorb
- 221: Filter
- 222: Stopfen
- 23, 24: Sitzventil
- 231, 241: Schließkörper
- 232, 242: Ventilblende
- 233, 243: Ventilsteuerkante/Ventilsteuerfläche
- 234, 244: Ventilöffnung
- 25: Stößelstange
- 26, 28: Strömungsführungseinrichtung
- 261, 281: Strömungsführungskanal
- 262: Öffnung
- 27: Zwischenraum

- 3: Schaltelement
- 31: Zylinder
- 4: Schaltelementventil
- 42: Ventilschieber
- 41, 43: Steuerfläche
- 51: Zuleitung
- 52: Schaltelementleitung
- 53: Vorsteuerleitung
- 6: Reservoir
- 7: Druckreduzierventil
- 8: Druckdämpfer
- 9: Halteventil
- 91: Steuerfläche
- 92: Ventilschieber
- 93: elastisches Element

- A, T: Ablaufbereich
- AA: Ausschnitt
- B: Breite eines Strömungsführungskanals 261
- P: Zulaufbereich
- S: Schnittebene

- ALPHA: Öffnungswinkel
- BETA: Winkel Ventilsteuerkante

## Patentansprüche

1. Druckregelventilvorrichtung (10) für ein Fluid, mit wenigstens einem Zulaufbereich (P) und einem ersten und zweiten Ablaufbereich (A, T), welche über zwei miteinander gekoppelte Sitzventile (23, 24) strömungstechnisch miteinander verbindbar sind, wobei durch das erste Sitzventil (23) ein Fluidzulauf von dem Zulaufbereich (P) zu dem ersten und zweiten Ablaufbereich (A, T) einstellbar ist und durch das zweite Sitzventil (24) ein Fluidablauf zwischen dem ersten und zweiten Ablaufbereich (A, T) einstellbar ist, **dadurch gekennzeichnet, dass** stromauf des ersten Sitzventils (23) in dem Zulaufbereich (P) eine Strömungsführungseinrichtung (26) angeordnet ist, welche dem zufließenden Fluid im Bereich des ersten Sitzventils (23) eine vorgegebene Strömungscharakteristik aufprägt.

2. Druckregelventilvorrichtung (10) nach Anspruch 1, wobei die Strömungsführungseinrichtung (26) so ausgeführt ist, dass das durch das erste Sitzventil (23) gelangende Fluid im Wesentlichen in Form einer dünnfilmigen Strömung entlang eines Schließkörpers (231) des ersten Sitzventils (23) strömt.

3. Druckregelventilvorrichtung (10) nach Anspruch 1 oder 2, wobei die Strömungsführungseinrichtung (26) so ausgeführt ist, dass dem zufließenden Fluid im Bereich des ersten Sitzventils (23) ein Drall aufgeprägt ist.

4. Druckregelventilvorrichtung (10) nach einem der Ansprüche 1 bis 3, wobei eine zweite Strömungsführungseinrichtung (28) stromauf des zweiten Sitzventils (24) strömungstechnisch zwischen dem ersten und dem zweiten Ablaufbereich (A, T) angeordnet ist und derart ausgeführt ist, dass das zu dem zweiten Auslaufbereich (T) strömende Fluid im Bereich des zweiten Sitzventils (24) in einen Drall versetzt wird.

5. Druckregelventilvorrichtung (10) nach Anspruch 3 und 4, wobei die erste und zweite Strömungsführungseinrichtung (26 ,28) so ausgeführt sind, dass der Drall der Fluidströmung durch das erste Sitzventil (23) und der Drall der Fluidströmung durch das zweite Sitzventil (24) den gleichen Drehsinn aufweisen.

6. Druckregelventilvorrichtung (10) nach einem der vorhergehenden Ansprüche, wobei die erste Strömungsführungseinrichtung (26) zumindest einen Strömungsführungskanal (261) aufweist, welcher zumindest annähernd tangential zu einer Ventilöffnung (234) des ersten Sitzventils (23) in den Zulaufbereich (P) mündet.

7. Druckregelventilvorrichtung (10) nach Anspruch 6, wobei der zumindest eine Strömungsführungskanal (261) stromabwärts in Richtung der Ventilöffnung (234) des ersten Sitzventils (23) trichterförmig zuläuft.

8. Druckregelventilvorrichtung (10) nach Anspruch 7, wobei die Trichterform einen Öffnungswinkel (ALPHA) von 40° bis 80° aufweist, insbesondere 60°±10°.

9. Druckregelventilvorrichtung (10) nach einem der Ansprüche 6 bis 8, wobei eine Breite (B) des zumindest einen Strömungsführungskanals (261) mit zunehmender Nähe zu einer Längsachse (L) der Druckregelventilvorrichtung abnimmt.

10. Druckregelventilvorrichtung (10) nach Anspruch 9, wobei ein Querschnitt des Strömungsführungskanals (261) auf einer Ebene senkrecht zu einer Längsachse (L) der Druckregelventilvorrichtung propellerförmig ist.

11. Druckregelventilvorrichtung (10) nach einem der vorhergehenden Ansprüche, wobei eine Ventilsteuerkante (233) des ersten Sitzventils (23) zumindest annähernd spitzwinklig oder rechtwinklig (BETA) ausgeführt ist.

12. Druckregelventilvorrichtung (10) nach einem der vorhergehenden Ansprüche, wobei sich eine Ventilöffnung (234) des ersten Sitzventils (23) stromabwärts einer Ventilsteuerkante (233) oder Steuerfläche des ersten Sitzventils (23) kontinuierlich aufweitet.

13. Druckregelventilvorrichtung (10) nach einem der vorhergehenden Ansprüche, aufweisend einen Elektromagneten (12, 13, 14), insbesondere Proportional-Elektromagneten, zur Betätigung von Schließkörpern (231, 241) des ersten und zweiten Sitzventils (23, 24).

14. Hydraulik-Druckregelventilvorrichtung (10), insbesondere eines Fahrzeuggetriebes, ausgeführt nach einem der vorhergehenden Ansprüche.

## Claims

1. Pressure regulating valve device (10) for a fluid, having at least one inflow region (P) and having a first and a second outflow region (A, T), which are connectable to one another in terms of flow by way of two coupled-together seat valves (23, 24), wherein a fluid inflow from the inflow region (P) to the first and second outflow regions (A, T) can be set by way of the first seat valve (23), and a fluid outflow between the first and second outflow regions (A, T) can be set by way of the second seat valve (24), **characterized in that**, upstream of the first seat valve (23) in the inflow region (P), there is arranged a flow-guiding device (26) which imparts a predefined flow characteristic to the inflowing fluid in the region of the first seat valve (23).

2. Pressure regulating valve device (10) according to Claim 1, wherein the flow-guiding device (26) is designed such that the fluid that passes through the first seat valve (23) flows substantially in the form of a thin-film flow along a closing body (231) of the first seat valve (23).

3. Pressure regulating valve device (10) according to Claim 1 or 2, wherein the flow-guiding device (26) is designed such that a swirl is imparted to the inflowing fluid in the region of the first seat valve (23).

4. Pressure regulating valve device (10) according to one of Claims 1 to 3, wherein a second flow-guiding device (28) is arranged upstream of the second seat valve (24) and between the first and the second outflow region (A, T) in terms of flow, and is designed such that the fluid flowing to the second outflow region (T) has a swirl imparted to it in the region of the second seat valve (24).

5. Pressure regulating valve device (10) according to Claim 3 and 4, wherein the first and second flow-guiding devices (26, 28) are designed such that the swirl of the fluid flow through the first seat valve (23) and the swirl of the fluid flow through the second seat valve (24) have the same direction of rotation.

6. Pressure regulating valve device (10) according to one of the preceding claims, wherein the first flow-guiding device (26) has at least one flow-guiding duct (261) which issues into the inflow region (P) at least approximately tangentially with respect to a valve opening (234) of the first seat valve (23).

7. Pressure regulating valve device (10) according to Claim 6, wherein the at least one flow-guiding duct (261) narrows in a funnel shape in a downstream direction toward the valve opening (234) of the first seat valve (23).

8. Pressure regulating valve device (10) according to Claim 7, wherein the funnel shape has an opening angle (ALPHA) of 40° to 80°, in particular 60°±10°.

9. Pressure regulating valve device (10) according to one of Claims 6 to 8, wherein a width (B) of the at least one flow-guiding duct (261) decreases with increasing proximity to a longitudinal axis (L) of the pressure regulating valve device.

10. Pressure regulating valve device (10) according to Claim 9, wherein a cross section of the flow-guiding duct (261) in a plane perpendicular to a longitudinal axis (L) of the pressure regulating valve device is of propeller-shaped form.

11. Pressure regulating valve device (10) according to one of the preceding claims, wherein a valve control edge (233) of the first seat valve (23) is of at least approximately acute-angled or right-angled (BETA) form.

12. Pressure regulating valve device (10) according to one of the preceding claims, wherein a valve opening (234) of the first seat valve (23) widens in continuous fashion downstream of a valve control edge (233) or control surface of the first seat valve (23).

13. Pressure regulating valve device (10) according to one of the preceding claims, having an electromagnet (12, 13, 14), in particular proportional electromagnet, for the actuation of closing bodies (231, 241) of the first and second seat valves (23, 24).

14. Hydraulic pressure regulating valve device (10), in particular of a vehicle transmission, designed according to one of the preceding claims.

## Revendications

1. Dispositif de soupape de régulation de pression (10) pour un fluide, comprenant au moins une région d'arrivée (P) et une première et une deuxième région de sortie (A, T), lesquelles peuvent être connectées fluidiquement l'une à l'autre par le biais de deux soupapes à siège (23, 24) accouplées l'une à l'autre, une arrivée de fluide depuis la région d'arrivée (P) jusqu'à la première et la deuxième région de sortie (A, T) pouvant être réglée au moyen de la première soupape à siège (23) et une sortie de fluide entre la première et la deuxième région de sortie (A, T) pouvant être réglée au moyen de la deuxième soupape à siège (24), **caractérisé en ce qu'**en amont de la première soupape à siège (23) dans la région d'arrivée (P) est disposé un dispositif de guidage d'écoulement (26), lequel confère au fluide arrivant dans la région de la première soupape à siège (23) une caractéristique d'écoulement prédéfinie.

2. Dispositif de soupape de régulation de pression (10) selon la revendication 1, dans lequel le dispositif de guidage d'écoulement (26) est réalisé de telle sorte que le fluide parvenant à travers la première soupape à siège (23) s'écoule essentiellement sous la forme d'un écoulement en couche mince le long d'un corps de fermeture (231) de la première soupape à siège (23).

3. Dispositif de soupape de régulation de pression (10) selon la revendication 1 ou 2, dans lequel le dispositif de guidage d'écoulement (26) est réalisé de telle sorte qu'un tourbillonnement soit conféré au fluide arrivant dans la région de la première soupape à siège (23).

4. Dispositif de soupape de régulation de pression (10) selon l'une quelconque des revendications 1 à 3, dans lequel un deuxième dispositif de guidage d'écoulement (28) est disposé en amont de la deuxième soupape à siège (24) du point de vue de la technique d'écoulement entre la première et la deuxième région de sortie (A, T) et est réalisé de telle sorte que le fluide s'écoulant jusqu'à la deuxième région de sortie (T) soit soumis à un tourbillonnement dans la région de la deuxième soupape à siège (24).

5. Dispositif de soupape de régulation de pression (10) selon les revendications 3 et 4, dans lequel le premier et le deuxième dispositif de guidage d'écoulement (26, 28) sont réalisés de telle sorte que le tourbillonnement de l'écoulement de fluide à travers la première soupape à siège (23) et le tourbillonnement de l'écoulement de fluide à travers la deuxième soupape à siège (24) présentent le même sens de rotation.

6. Dispositif de soupape de régulation de pression (10) selon l'une quelconque des revendications précédentes, dans lequel le premier dispositif de guidage d'écoulement (26) comprend au moins un canal de guidage d'écoulement (261), lequel débouche au moins approximativement tangentiellement à une ouverture de soupape (234) de la première soupape à siège (23) dans la région d'arrivée (P).

7. Dispositif de soupape de régulation de pression (10) selon la revendication 6, dans lequel l'au moins un canal de guidage d'écoulement (261) se termine en forme d'entonnoir en aval dans la direction de l'ouverture de soupape (234) de la première soupape à siège (23).

8. Dispositif de soupape de régulation de pression (10) selon la revendication 7, dans lequel la forme d'entonnoir présente un angle d'ouverture (ALPHA) de 40° à 80°, en particulier de 60° ± 10°.

9. Dispositif de soupape de régulation de pression (10) selon l'une quelconque des revendications 6 à 8, dans lequel une largeur (B) de l'au moins un canal de guidage d'écoulement (261) diminue au fur et à mesure que l'on se rapproche d'un axe longitudinal (L) du dispositif de soupape de régulation de pression.

10. Dispositif de soupape de régulation de pression (10) selon la revendication 9, dans lequel une section transversale du canal de guidage d'écoulement (261) est en forme d'hélice sur un plan perpendiculaire à un axe longitudinal (L) du dispositif de soupape de régulation de pression.

11. Dispositif de soupape de régulation de pression (10) selon l'une quelconque des revendications précédentes, dans lequel une arête de commande de soupape (233) de la première soupape à siège (23) est réalisée au moins approximativement de manière à présenter un angle aigu ou de manière perpendiculaire (BETA).

12. Dispositif de soupape de régulation de pression (10) selon l'une quelconque des revendications précédentes, dans lequel une ouverture de soupape (234) de la première soupape à siège (23) s'élargit de manière continue en aval d'une arête de commande de soupape (233) ou d'une surface de commande de la première soupape à siège (23).

13. Dispositif de soupape de régulation de pression (10) selon l'une quelconque des revendications précédentes, comprenant un électroaimant (12, 13, 14), en particulier un électroaimant proportionnel, pour l'actionnement de corps de fermeture (231, 241) de la première et de la deuxième soupape à siège (23, 24).

14. Dispositif de soupape de régulation de pression hydraulique (10), en particulier d'une transmission de véhicule, réalisé selon l'une quelconque des revendications précédentes.
